# EUROPEAN PATENT APPLICATION

(11) **EP 4 425 400 A1**
(43) Date of publication of application: **04.09.2024**
(21) Application number: 22886512.7
(22) Date of filing: 15.09.2022
(51) Int. Cl.: G06Q 10/083, G06Q 10/30

(54) **INFORMATION PROCESSING DEVICE, INFORMATION PROCESSING METHOD, AND INFORMATION PROCESSING PROGRAM**

(30) Priority: 25.10.2021 JP 2021174168
(71) Applicant: Unicharm Corporation, Shikokuchuo-shi, Ehime 799-0111 (JP)
(72) Inventor: IKEGAMI, Takeshi, Tokyo 108-8575 (JP)
(74) Representative: Dolleymores
(86) International application number: PCT/JP2022/034629
(87) International publication number: WO 2023/074178

(57) **Abstract**

An information processing apparatus according to the present application includes an acquisition unit that acquires, for each facility that is used by users, collection information related to a collection of used non-woven fabric products that have been used by the users and replenishment information related to replenishment of non-woven fabric products that are to be used by the users, and a providing unit that provides, based on the collection information and the replenishment information, task information for performing, for each of the facilities, a task that is related to the collection of the used non-woven fabric products and the replenishment of the non-woven fabric products.

## Description

### Field

The present invention relates to an information processing apparatus, an information processing method, and an information processing program.

### Background

Conventionally, there is a known technology for collecting used non-woven fabric products that are used by users in predetermined facilities in accordance with a collection plan.

### Citation List

### Patent Literature

Patent Literature 1: Japanese Laid-open Patent Publication No. 2002-53202

### Summary

### Technical Problem

However, in the conventional technology described above, the used non-woven fabric products are merely collected in the predetermined facilities in accordance with the collection plan, so that there is a room to efficiently perform a delivery of the non-woven fabric products that are to be used by the users and a collection of the used non-woven fabric products.

Accordingly, the present invention has been conceived in light of the circumstances described above and an object thereof is to efficiently perform a delivery of non-woven fabric products and a collection of used non-woven fabric products.

### Solution to Problem

An information processing apparatus according to the present application includes: an acquisition unit that acquires, for each facility that is used by users, collection information related to a collection of used non-woven fabric products that have been used by the users and replenishment information related to replenishment of non-woven fabric products that are to be used by the users; and a providing unit that provides, based on the collection information and the replenishment information, task information for performing, for each of the facilities, a task that is related to the collection of the used non-woven fabric products and the replenishment of the non-woven fabric products.

### Advantageous Effects of Invention

According to one aspect of an embodiment, it is possible to efficiently perform a delivery of non-woven fabric products and a collection of used non-woven fabric products.

### Brief Description of Drawings

FIG. 1 is a diagram illustrating one example of information processing performed by an information processing apparatus according to an embodiment.
FIG. 2 is a diagram illustrating one example of a configuration of an information processing system according to the embodiment.
FIG. 3 is a diagram illustrating one example of a management information storage unit according to the embodiment.
FIG. 4 is a diagram illustrating one example of a user information storage unit according to the embodiment.
FIG. 5 is a diagram illustrating one example of a tracking information storage unit according to the embodiment.
FIG. 6 is a flowchart illustrating one example of the flow of a management process performed by the information processing apparatus according to the embodiment.
FIG. 7 is a flowchart illustrating one example of the flow of a providing process performed by the information processing apparatus according to the embodiment.
FIG. 8 is a diagram illustrating one example of a hardware configuration.

### Description of Embodiments

At least the following matters will be apparent from the description of the present specification and the accompanying drawings.

An information processing apparatus includes an acquisition unit that acquires, for each facility that is used by users, collection information related to a collection of used non-woven fabric products that have been used by the users and replenishment information related to replenishment of non-woven fabric products that are to be used by the users, and a providing unit that provides, based on the collection information and the replenishment information, task information for performing, for each of the facilities, a task that is related to the collection of the used non-woven fabric products and the replenishment of the non-woven fabric products.

According to the information processing apparatus as described above, the information processing apparatus acquires, for each of the facilities that are used by the users, the collection information related to the collection of the used non-woven fabric products (for example, diapers, etc.) that have been used by the users, such as children or elderly persons, and the replenishment information related to the replenishment of the non-woven fabric products that are to be used by the users. Here, the facilities are facilities that are used by the children and the elderly persons and are, for example, kindergartens, nursery schools, care facilities, or the like.

Subsequently, the information processing apparatus provides, based on the acquired collection information and the acquired replenishment information, the task information for performing, for each facility, the task that is related to the collection of the used non-woven fabric products and the replenishment of the non-woven fabric products. As a result of this, the information processing apparatus is able to efficiently perform the delivery of the non-woven fabric products and the collection of the used non-woven fabric products.

In general, a business person or the like in a facility often disposes of the used non-woven fabric products by making a collection request for collecting the used non-woven fabric products to a collection vendor by bearing a predetermined expense. Furthermore, for example, if the facility is a care facility or the like that has an incineration facility, the facility is able to dispose of the used non-woven fabric products in the own facility, there may be a case in which time and efforts are needed for the incineration. Furthermore, for example, in the facility, such as a nursery school, in order to ask customers who nurses the users to bring back the used non-woven fabric products, a childcare worker needs to temporarily store the used non-woven fabric products or make arrangements to ask the customers to bring back the used non-woven fabric products, so that time and efforts are needed in some case. Furthermore, for the childcare worker, there is also a concern about temporarily storing the used non-woven fabric products in terms of a hygienic standpoint. In this case, it is preferable to reduce the expense and the time and efforts that are needed to dispose of the used non-woven fabric products.

Furthermore, if the time and effort needed to receive new non-woven fabric products delivered to a facility and needed to dispose of the used non-woven fabric products are able to be performed and completed as a flow of a single business assignment, it is conceivable to reduce the work load of the business assignment exerted on a business person or the like in the facility.

Furthermore, when new non-woven fabric products are delivered to a facility, a mobile object, such as a truck, that has been used for the delivery sometimes returns without any load. As a result of this, if the mobile object also collects the used non-woven fabric products when the mobile object that has completed the delivery returns from the facility, it is conceivable to increase the logistics efficiency. Furthermore, at the same time, it is also easily conceivable to reduce the collection cost needed for the used non-woven fabric products.

In this way, the information processing apparatus provides, on the basis of the collection information and the replenishment information that have been acquired for each of the facilities that are used by the users, the task information for performing, for each of the facilities, the task of the collection of the used non-woven fabric products and the replenishment of the non-woven fabric products, so that the information processing apparatus is able to efficiently perform the delivery of the non-woven fabric products and the collection of the used non-woven fabric products. As a result of this, the information processing apparatus is able to eliminate the time and efforts needed for the business person or the like in the facility. Furthermore, the information processing apparatus is able to reduce the collection cost needed for the used non-woven fabric products.

Furthermore, the information processing apparatus estimates, based on the collection information and the replenishment information that are acquired by the acquisition unit, an amount of collection that is an amount of the used non-woven fabric products to be collected from each of the facilities, and an amount of replenishment that is an amount of the non-woven fabric products to be replenished to each of the facilities, and provides the task information based on the amount of collection and the amount of replenishment.

According to the information processing apparatus as described above, the information processing apparatus estimates the amount of collection of the used diapers indicated by, for example, the collection information as the amount of collection. Furthermore, the information processing apparatus estimates, as the amount of replenishment, a difference between a stock quantity and a predetermined value that is the number of diapers that are manageable as a stock. As a result of this, the information processing apparatus is able to perform the delivery of the non-woven fabric products and the collection of the used non-woven fabric products at an appropriate timing.

Furthermore, the information processing apparatus estimates the amount of collection and the amount of replenishment based on the collection information, the replenishment information, and information related to a mobile object that delivers the used non-woven fabric products and the non-woven fabric products.

According to the information processing apparatus as described above, the information processing apparatus estimates the amount of collection and the amount of replenishment on the basis of, for example, the collection information, the replenishment information, the loadable loading capacity of the mobile object that delivers the used diapers and the new diapers, and the information related to the weight or the like, so that the information processing apparatus is able to enhance the efficiency of the delivery of the used non-woven fabric products and the non-woven fabric products.

Furthermore, the information processing apparatus estimates the amount of collection and the amount of replenishment based on the collection information, the replenishment information, and a loadable loading capacity of the mobile object as the information related to the mobile object.

According to the information processing apparatus as described above, for example, the information processing apparatus estimates the amount of collection and the amount of replenishment in consideration of the loading capacity of the mobile object, such as a truck. As a result of this, the information processing apparatus estimates the amount of collection and the amount of replenishment in consideration of the loading capacity of the truck with respect to, for example, articles that are not folded by regulations, such as used diapers, so that the information processing apparatus is able to enhance the efficiency of delivering the used diapers and the new diapers.

Furthermore, the information processing apparatus estimates the amount of collection and the amount of replenishment based on the collection information, the replenishment information, and a loadable weight of the mobile object as the information related to the mobile object.

According to the information processing apparatus as described above, the information processing apparatus estimates amount of collection and the amount of replenishment in consideration of, for example, the loadable weight of the mobile object, such as the truck As a result of this, the information processing apparatus estimates the amount of collection and the amount of replenishment in consideration of the loadable weight of the truck with respect to articles, such as used diapers, that became heavier as a result of absorbing excrement, so that the information processing apparatus is able to enhance the efficiency of delivering the used diapers and the new diapers.

Furthermore, the information processing apparatus provides, as the task information, replenishment task information for performing, for each of the facilities, the task related to the replenishment of the non-woven fabric products to a business person who replenishes the non-woven fabric products.

According to the information processing apparatus as described above, for example, if the amount of replenishment of the diapers to be replenished to the facility is equal to or larger than the predetermined amount, the information processing apparatus provides, as the task information to the business person that replenishes the diapers, the information related to the task schedule indicating that the diapers with an amount corresponding to the amount of replenishment of the diapers that are to be replenished to the facility one week later. As a result of this, the information processing apparatus is able to efficiently perform the delivery of the non-woven fabric products.

Furthermore, the information processing apparatus provides, as the task information, collection task information for collecting, for each of the facilities, the used non-woven fabric products as a recycle target to the business person who collects the used non-woven fabric products.

According to the information processing apparatus as described above, for example, if the amount of collection of the used diapers to be collected from the facility is equal to or larger than the predetermined amount, the information processing apparatus provides, as the task information, the information related to the task schedule indicating that the used diapers with an amount corresponding to the amount of collection of the used diapers that are to be collected from the facility one week later to the business person that performs the collection of the used diapers. As a result of this, the information processing apparatus is able to efficiently perform the collection of the used non-woven fabric products.

Furthermore, the information processing apparatus generates ranking information related to a ranking of the facilities based on the collection information, and further provides the ranking information to the facilities.

According to the information processing apparatus as described above, the information processing apparatus generates the ranking information in which the facilities are ranked in descending order of amount of collection on the basis of, for example, the amount of collection of the used diapers that have been collected from each of the facilities. Subsequently, the information processing apparatus provides the generated ranking information to each of the facilities. As a result of this, the information processing apparatus is able to visualize the degree of contribution with respect to the recycle performed by each of the facilities.

Furthermore, the information processing apparatus further acquires information related to a course in which the used non-woven fabric products are recycled, further generates, based on the information related to the course, tracking information that is information indicating the course in which the used non-woven fabric products are recycled, and further provides the tracking information to the facilities.

According to the information processing apparatus as described above, the information processing apparatus acquires, for example, the address or the location information on each of the facilities from which the used diapers are collected, the location information on the mobile object that delivers the used diapers, and the information related to the situation acquired from the server that is managed by the recycling vendor of the recycling plant that performs the recycling process on the used diapers. Subsequently, the information processing apparatus generates, as the tracking information on the basis of the acquired location information and the information related to the situation, the map information that indicates that the collected used diapers are located which of the area. Then, the information processing apparatus further provides the generated tracking information to each of the facilities. In this way, the information processing apparatus is able to enhance consciousness related to the recycle of the used non-woven fabric products with respect to the business person in each of the facilities and each of the users who uses one of the facilities.

Furthermore, the information processing apparatus manages, for each of the facilities, information related to the non-woven fabric products based on the collection information and the replenishment information.

According to the information processing apparatus as described above, the information processing apparatus manages, for example, the stock information related to a stock of the diapers held by each of the facilities and the information related to the amount of the used diapers that have been collected from each of the facilities as various kinds of information. As a result of this, the information processing apparatus is able to appropriately manage the stock quantity of the non-woven fabric products and the amount of the used non-woven fabric products.

Furthermore, the information processing apparatus manages, for each of the facilities, an amount of the used non-woven fabric products that have been used by the users as the information related to the non-woven fabric products.

According to the information processing apparatus as described above, the information processing apparatus manages the information related to, for example, the amount of the used diapers that have been collected from each of the facilities. As a result of this, the information processing apparatus is able to appropriately manage the amount of the used non-woven fabric products.

Furthermore, the information processing apparatus manages, for each of the facilities, a stock quantity that is the number of non-woven fabric products that are to be used by the users as the information related to the non-woven fabric products.

According to the information processing apparatus as described above, the information processing apparatus manages the stock information related to, for example, the stock of the diapers stored by each of the facilities. As a result of this, the information processing apparatus is able to appropriately perform the stock management of the non-woven fabric products.

Furthermore, the information processing apparatus manages, for each of the facilities, the number of users who use the non-woven fabric products.

According to the information processing apparatus as described above, the information processing apparatus manages the number of users who use, for example, the diapers in the facilities. As a result of this, the information processing apparatus is able to appropriately manage the number of users.

One example of modes (hereinafter, described as "embodiments") for carrying out an information processing apparatus, an information processing method, and an information processing program will be described in detail below with reference to the drawings. Furthermore, the information processing apparatus, the information processing method, and the information processing program are not limited by the embodiments described below. In addition, in the embodiments below, the same components are denoted by the same reference symbols, and repeated explanation will be omitted.

### [Embodiment]

### [1. One example of information processing performed by information processing apparatus]

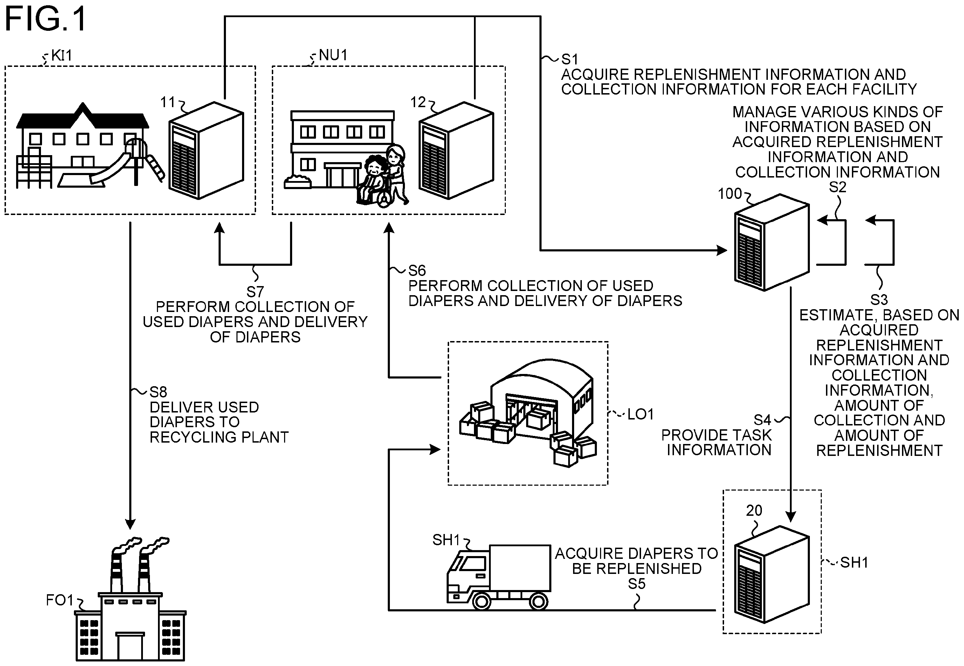

One example of information processing performed by an information processing apparatus 100 according to an embodiment will be described with reference to FIG. 1. FIG. 1 is a diagram illustrating one example of the information processing performed by the information processing apparatus 100 according to the embodiment. Furthermore, for the sake of convenience, the steps illustrated in FIG. 1 include a behavior performed by a natural person, or the like.

FIG. 1 illustrates an example in which user is a child or an elderly person. In the example illustrated in FIG. 1, a description will be given by using a nursery school KI1 as a facility that is used by children, and a care facility NU1 as a facility that is used by elderly persons. Furthermore, a server that manages various kinds of information for each facility is referred to as a facility server 10. In the example illustrated in FIG. 1, the server that manages various kinds of information in the nursery school KI1 is a facility server 11, and the server that manages various kinds of information in the care facility NU1 is a facility server 12.

The outline of one example of the information processing illustrated in FIG. 1 will be described. First, the information processing apparatus 100 acquires, from the nursery school KI1 and the care facility NU1, replenishment information related to replenishment of diapers (one example of non-woven fabric products) that are to be used by the users who are children or elderly persons, and collection information related to a collection of the used diapers that have been used by the users. Next, the information processing apparatus 100 provides, on the basis of the replenishment information and the collection information, task information for performing a task related to the collection of the used diapers and the replenishment of the diapers with respect to the nursery school KI1 and the care facility NU1. Then, a delivery company SH1 performs, on the basis of the task information, the collection of the used diapers and the replenishment of the diapers with respect to the nursery school KI1 and the care facility NU1. In the following, the information processing performed by the information processing apparatus 100 will be described in detail with reference to FIG. 1.

First, the information processing apparatus 100 acquires the replenishment information and the collection information for each facility (Step S1). For example, the information processing apparatus 100 acquires, from the facility server 11 installed in the nursery school KI1, the information related to a stock quantity related to a stock of diapers as the replenishment information and the information related to an amount of collection of the used diapers as the collection information. Furthermore, the information processing apparatus 100 acquires, from the facility server 12 installed in the care facility NU1, the information related to the stock quantity related to a stock of diapers as the replenishment information and the information related to an amount of collection of the used diapers as the collection information.

Subsequently, the information processing apparatus 100 manages various kinds of information on the basis of the acquired replenishment information and the acquired collection information (Step S2). For example, the information processing apparatus 100 manages, as the various kinds of information, stock information on the diapers, information related to an amount of used diapers, and the like.

Then, the information processing apparatus 100 estimates, on the basis of the acquired replenishment information and the acquired collection information, an amount of collection of the used diapers that are to be collected from each of the facilities and an amount of replenishment of the diapers that are to be replenished to each of the facilities (Step S3). For example, the information processing apparatus 100 estimates the amount of collection of the used diapers that are to be collected from the nursery school KI1 and the amount of replenishment of the diapers that are to be replenished to the nursery school KI1, on the basis of the information related to the stock quantity in the nursery school KI1 as the replenishment information and on the basis of the information related to the amount of collection from the nursery school KI1 as the collection information.

To give a more specific example, the information processing apparatus 100 estimates the amount of collection of the used diapers indicated by the collection information as the amount of collection. Furthermore, the information processing apparatus 100 estimates, as the amount of replenishment, a difference between the stock quantity and a predetermined value that corresponds to the number of diapers that are manageable as a stock by the nursery school KI1.

Furthermore, the information processing apparatus 100 estimates the amount of collection of the used diapers that are to be collected from the care facility NU1 and the amount of replenishment of the diapers that are to be replenished to the care facility NU1, on the basis of the information related to the stock quantity in the care facility NU1 as the replenishment information and the information related to the amount of collection from the care facility NU1 as the collection information.

To give a more specific example, the information processing apparatus 100 estimates the amount of collection of the used diapers indicated by the collection information as the amount of collection. Furthermore, the information processing apparatus 100 estimates, as the amount of replenishment, a difference between the stock quantity and the predetermined value that corresponds to the number of diapers that are manageable as a stock by the care facility NU1.

Subsequently, the information processing apparatus 100 provides, to a delivery company server 20 on the basis of the estimated amount of collection and the estimated amount of replenishment, the task information for performing the task related to the collection of the used diapers and the replenishment of the diapers with respect to the nursery school KI1 and the care facility NU1 (Step S4) .

For example, it is assumed that the amount of collection of the used diapers to be collected from the nursery school KI1 is equal to or larger than a predetermined amount and the amount of replenishment of the diapers to be replenished to the nursery school KI1 is equal to or larger than the predetermined amount. In this case, the information processing apparatus 100 provides, to the delivery company server 20, as the task information, information related to a task schedule indicating that the used diapers with an amount corresponding to the amount of collection are to be collected from the nursery school KI1 and the diapers with an amount corresponding to the amount of replenishment are to be replenished to the nursery school KI1 one week later.

Furthermore, it is assumed that the amount of collection of the used diapers to be collected from the care facility NU1 is equal to or larger than the predetermined amount and the amount of replenishment of the diapers to be replenished to the care facility NU1 is equal to or larger than the predetermined amount. In this case, the information processing apparatus 100 provides, to the delivery company server 20, as the task information, information related to a task schedule indicating that the used diapers with an amount corresponding to the amount of collection are to be collected from the care facility NU1 and the diapers with an amount corresponding to the amount of replenishment are to be replenished to the care facility NU1 one week later.

In this way, the information processing apparatus 100 provides the task information associated with each of the facilities to the delivery company server 20. Furthermore, the information processing apparatus 100 may collectively provide the task information for each facility that is the target for the task to be carried out, or may provide the task information on each of the facilities one by one for each predetermined timing.

Furthermore, the task information may include a task instruction to collect the used non-woven fabric products in a state in which the used non-woven fabric products are classified into each facility or classified into each type of the non-woven fabric products.

Here, the delivery company SH1 that manages the delivery company server 20 may be any delivery company and is, for example, a delivery company that is assigned by a local municipality, a delivery company that is assigned by a business person who manages the information processing apparatus 100, a delivery company that is assigned by a business person in a facility, or the like.

Furthermore, the delivery company SH1 performs a collection of the used diapers and a delivery of the diapers by using a mobile object, such as a truck. For example, when the used diapers that are loaded onto the mobile object, the used diapers are separated from the diapers that are to be replenished by using a separation or the like such that the used diapers do not affect the diapers that are to be replenished. Furthermore, the mobile object mentioned here is formed in an arbitrary size. For example, the mobile object is a small size truck, a medium size truck, or the like.

Then, the delivery company SH1 acquires the diapers that are to be replenished to each of the facilities from the distribution center LO1 that manages the diapers that are to be delivered to each of the facilities, each of the retail stores, and the like (Step S5). For example, the delivery company SH1 acquires, in accordance with the information related to the task schedule, the diapers with an amount corresponding to the amount of replenishment of the diapers that are to be delivered from the distribution center LO1.

Subsequently, the delivery company SH1 performs a collection of the used diapers and a delivery of the diapers with respect to the care facility NU1 (Step S6). For example, the delivery company SH1 performs a collection of the used diapers and a delivery of the diapers with respect to the care facility NU1 in accordance with the information related to the task schedule. In this case, the delivery company SH1 collects the used diapers as a recycle target from the care facility NU1.

Then, the delivery company SH1 performs a collection of the used diapers and a delivery of the diapers with respect to the nursery school KI1 (Step S7). For example, the delivery company SH1 performs a collection of the used diapers and a delivery of the diapers with respect to the care facility NU1 in accordance with the information related to the task schedule. In this case, the delivery company SH1 collects the used diapers as a recycle target from the care facility NU1.

At Steps S6 and S7, the delivery company SH1 classifies the non-woven fabric products into, for example, adult non-woven fabric products and child non-woven fabric products and collects the classified non-woven fabric products. As a result of this, the information processing apparatus 100 is able to collect the used non-woven fabric products in a state in which the used non-woven fabric products are classified into each facility or classified into each type of the non-woven fabric products.

Subsequently, the delivery company SH1 delivers the used diapers to the recycling plant FO1 (Step S8). Then, a recycling vendor that performs a recycling process in the recycling plant FO1 performs the recycling process on the used diapers. In this way, the collected used diapers are recycled in the recycling plant FO1.

In addition, the recycling vendor mentioned here may be any recycling vendor and is, for example, a recycling vendor that is assigned by a local municipality, a recycling vendor that is assigned by a business person who manages the information processing apparatus 100, a recycling vendor that is assigned by a business person in a facility, or the like.

Conventionally, the used non-woven fabric products are merely collected in the predetermined facility in accordance with the collection plan, so that there is a case in which it is not efficiently perform a delivery of the non-woven fabric products that are to be used by users and a collection of the used non-woven fabric products. Accordingly, the information processing apparatus 100 acquires the collection information and the replenishment information for each facility that is used by the users. Then, the information processing apparatus 100 provides, on the basis of the collection information and the replenishment information, the task information for performing the task related to the collection of the used non-woven fabric products and the replenishment of the non-woven fabric products for each facility. In this way, the information processing apparatus 100 is able to efficiently perform the delivery of the non-woven fabric products and the collection of the used non-woven fabric products.

Furthermore, the information processing apparatus 100 is able to collect the used non-woven fabric products while delivering the new non-woven fabric products, which are needed in each of the facilities, in the same facility at the same timing. Furthermore, the information processing apparatus 100 collects the non-woven fabric products by classifying into, for example, adult non-woven fabric products and child non-woven fabric products, so that the information processing apparatus 100 is able to collect the used non-woven fabric products in a state in which the used non-woven fabric products are classified into each facility or classified into each type of the non-woven fabric products. As a result of this, the information processing apparatus 100 is able to collect the used non-woven fabric products in a state in which the used non-woven fabric products are easily recycled. As a result of this, the information processing apparatus 100 is able to urge to efficiently recycle the used non-woven fabric products.

### [2. Configuration on information processing system]

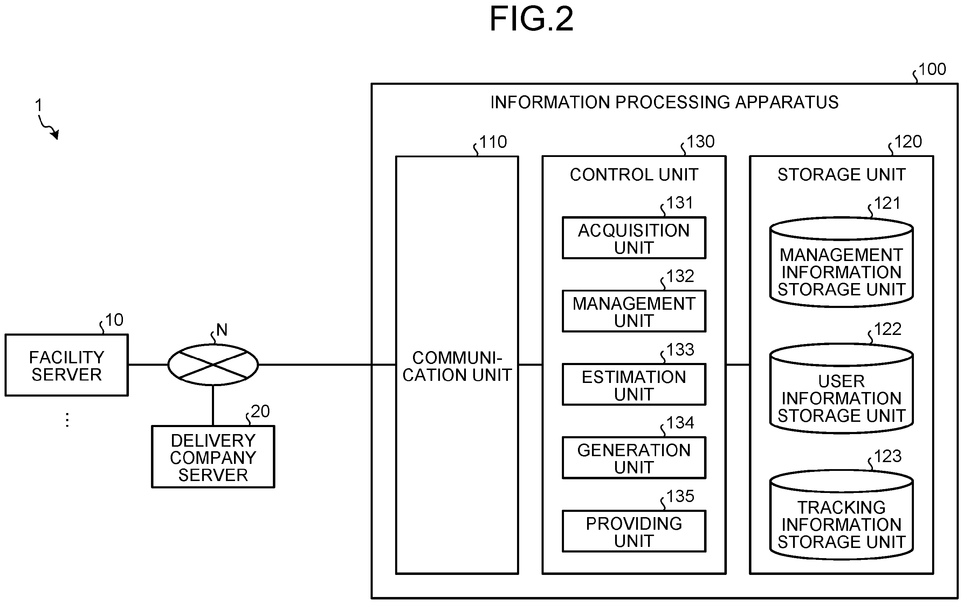

In the following, a configuration of an information processing system 1 according to the embodiment will be described with reference to FIG. 2. FIG. 2 is a diagram illustrating an example of the configuration of the information processing system 1 according to the embodiment. As illustrated in FIG. 2, the information processing system 1 includes the facility server 10, the delivery company server 20, and the information processing apparatus 100. The facility server 10, the delivery company server 20, and the information processing apparatus 100 are connected so as to be able to communicate each other via a network N in a wired or wireless manner. Furthermore, in the information processing system 1 illustrated in FIG. 2, the plurality of facility servers 10, the plurality of delivery company servers 20, or the plurality of information processing apparatuses 100 may be included.

The facility server 10 is an information processing apparatus that manages information related to the facility and is implemented by, for example, a server device, a cloud system, or the like. For example, the facility server 10 manages information related to the users who use the facility, stock information related to the non-woven fabric products that are to be used in the facility, information related to the used non-woven fabric products that have been collected in the facility, and the like. Furthermore, the facility server 10 is managed by a business person in the facility. For example, the business person in the facility uses a predetermined input device, and stores the information related to the users who uses the facility, the stock information related to the non-woven fabric products that are to be used in the facility, the information related to the used non-woven fabric products that have been collected in the facility, and the like in the facility server 10.

Furthermore, the facility server 10 may be a terminal device or the like as long as the terminal device has a function capable of managing various kinds of information. For example, the terminal device is an information processing apparatus that is used by a facility vendor that accesses content, such as web content that is displayed on a browser or content for an application. For example, terminal device is a desktop type personal computer (PC), a notebook type PC, a tablet type terminal, a mobile phone, a personal digital assistant (PDA), or the like.

The delivery company server 20 is an information processing apparatus that is managed by a delivery company that performs a collection of the used non-woven fabric products and replenishment of the non-woven fabric products with respect to the facility, and is implemented by, for example, a server device, a cloud system, or the like. For example, the delivery company server 20 receives the task information that is provided by the information processing apparatus 100. Then, the delivery company collects the used non-woven fabric products from the facility in accordance with the task information. Furthermore, the delivery company replenishes the non-woven fabric products to the facility in accordance with the task information.

The information processing apparatus 100 is an information processing apparatus capable of communicating with various kinds of devices via the network N, such as the Internet, and is implemented by, for example, a server device, a cloud system, or the like. For example, the information processing apparatus 100 is connected so as to be able to communicate with various kinds of the other devices via the network N.

### [3. Configuration of information processing apparatus]

In addition, a configuration of the information processing apparatus 100 according to the embodiment will be described with reference to FIG. 2. FIG. 2 illustrates an example of the configuration of the information processing apparatus 100 according to the embodiment. As illustrated in FIG. 2, the information processing apparatus 100 includes a communication unit 110, a storage unit 120, and a control unit 130.

### (Regarding communication unit 110)

The communication unit 110 is implemented by, for example, a network interface card (NIC), or the like. In addition, the communication unit 110 is connected to the network N in a wired or wireless manner, and sends and receives information to and from various kinds of the other devices.

### (Regarding storage unit 120)

The storage unit 120 is implemented by, for example, a semiconductor memory device, such as a random access memory (RAM) or a flash memory, or a storage device, such as a hard disk or an optical disk. The storage unit 120 includes a management information storage unit 121, a user information storage unit 122, and a tracking information storage unit 123.

### (Regarding management information storage unit 121)

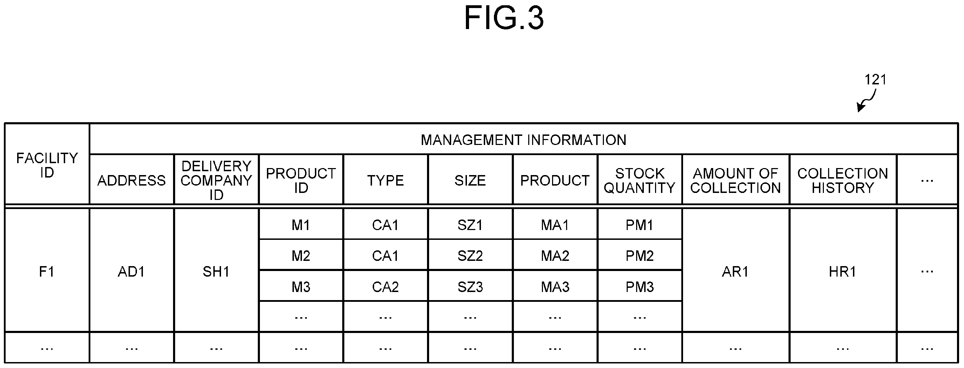

The management information storage unit 121 stores therein various kinds of information related to each of the facilities. Here, FIG. 3 illustrates one example of the management information storage unit 121 according to the embodiment. In the example illustrated in FIG. 3, the management information storage unit 121 includes items of "facility ID (Identifier)" and "management information". For example, the item of "management information" includes items of "address", "delivery company ID", "product ID", "type", "size", "product", "stock quantity", "amount of collection", "collection history", and the like.

The "facility ID" is an identifier for identifying a facility. The "address" is information related to an address of the facility that is associated with the "facility ID" and location information that is indicated by the facility. The "delivery company ID" is an identifier for identifying a delivery company that is associated with the "facility ID". For example, the delivery company is a delivery company that is assigned by a local municipality, a delivery company that is assigned by the facility, a delivery company that made a contract with the business person who manages the information processing apparatus 100, or the like.

The "product ID" is an identifier for identifying a product. The "type" is information related to a type of the product that is associated with the "product ID". For example, it is assumed that the product is a diaper. In this case, the type of the diaper is a child diaper, an adult diaper, or the like. Furthermore, the type of the diaper is a tape type diaper, a pants type diaper, or the like. Furthermore, the type of the diaper is a regular type diaper, a diaper having a function for preventing skin roughness, or the like.

The "size" is information related to the size of the product that is associated with the "product ID". For example, the size is S, M, L, or the like. The "product" is information related to the product that is associated with the "product ID". The "stock quantity" is information related to the stock quantity of the product associated with the "product ID". For example, the stock quantity is the number of non-woven fabric products that are managed by the facility.

The "amount of collection" is information related to an amount of the collected products that are associated with the "facility ID". The "collection history" is information that is associated with the "facility ID" and is information that is related to an amount of the products that have been collected before this. For example, the collection history is information in which the collected date and time are associated with an amount of collected products. Furthermore, the collection history may include information related to whether or not the collected used diapers have been recycled or information related to the number of times indicating that the collected used diaper has been recycled. Furthermore, the collection history may be information related to the total amount of the products that have been collected before now.

For example, in FIG. 3, "F1" that is identified by the facility ID indicates that the address is "AD1", the delivery company ID is "SH1", the product ID is "M1", the type is "CA1", the size is "SZ1", the product is "MA1", and the stock quantity is "PM1". Furthermore, "F1" indicates that the amount of collection is "AR1" and the collection history is "HR1".

Moreover, in the example illustrated in FIG. 3, the address and the like are represented by using abstract signs, such as "AD1", but the address and the like may be indicated by a file format or the like of a file that includes information related to a numerical value, a character string, an address, and the like.

### (Regarding user information storage unit 122)

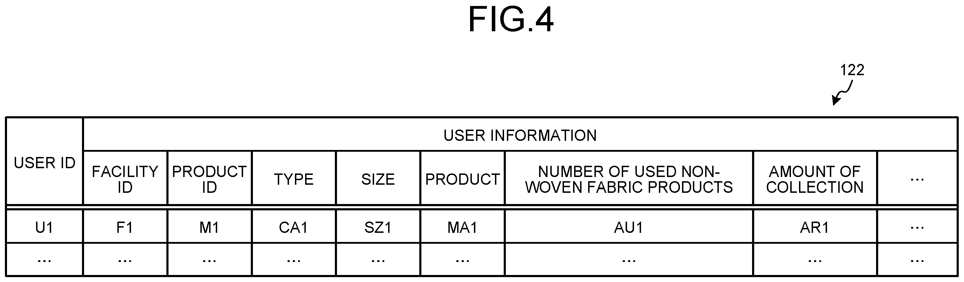

The user information storage unit 122 stores therein various kinds of information related to the users. Here, FIG. 4 illustrates one example of the user information storage unit 122 according to the embodiment. In the example illustrated in FIG. 4, the user information storage unit 122 includes items of "user ID" and "user information". For example, the "user information" includes items of "facility ID", "product ID", "type", "size", "product", "the number of used non-woven fabric products", "amount of collection", and the like.

The "user ID" is an identifier for identifying a user. The "facility ID" is an identifier for identifying the facility that is associated with the "user ID". Here, the facility is a facility that is used by the user.

The "product ID" is an identifier for identifying a product. The "type" is information related to a type of the product that is associated with the "product ID". For example, it is assumed that the product is a diaper. In this case, the type of the diaper is a child diaper, an adult diaper, or the like. Furthermore, the type of the diaper is a tape type diaper, a pants type diaper, or the like. Furthermore, the type of the diapers is a regular type diaper, a diaper having a function for preventing skin roughness, or the like.

The "size" is information related to the size of the product that is associated with the "product ID". For example, the size is S, M, L, or the like. The "product" is information related to the product that is associated with the "product ID". The "number of used non-woven fabric products" is information related to the number of non-woven fabric products that have been used by the user that is associated with the "user ID". For example, the number of used non-woven fabric products is information related to the number of non-woven fabric products that have been used by the user in one day. The "amount of collection" is information related to an amount of the collected non-woven fabric products that are associated with the "user ID".

For example, in FIG. 4, "U1" that is identified by the user ID indicates that the facility ID is "F1", the product ID is "M1", the type is "CA1", the size is "SZ1", the product is "MA1", the number of used non-woven fabric products is "AU1", and the amount of collection is "AR1".

Moreover, in the example illustrated in FIG. 4, the type and the like are represented by using abstract signs, such as "CA1", but the type and the like may be indicated by a file format or the like of a file that includes information related to a numerical value, a character string, an address, and the like.

### (Regarding tracking information storage unit 123)

The tracking information storage unit 123 stores therein various kinds of information related to a course in which the used non-woven fabric products are recycled. For example, the information related to the course in which the used non-woven fabric products are recycled mentioned here is tracking information or the like that is able to track the course in which the used non-woven fabric products are recycled.

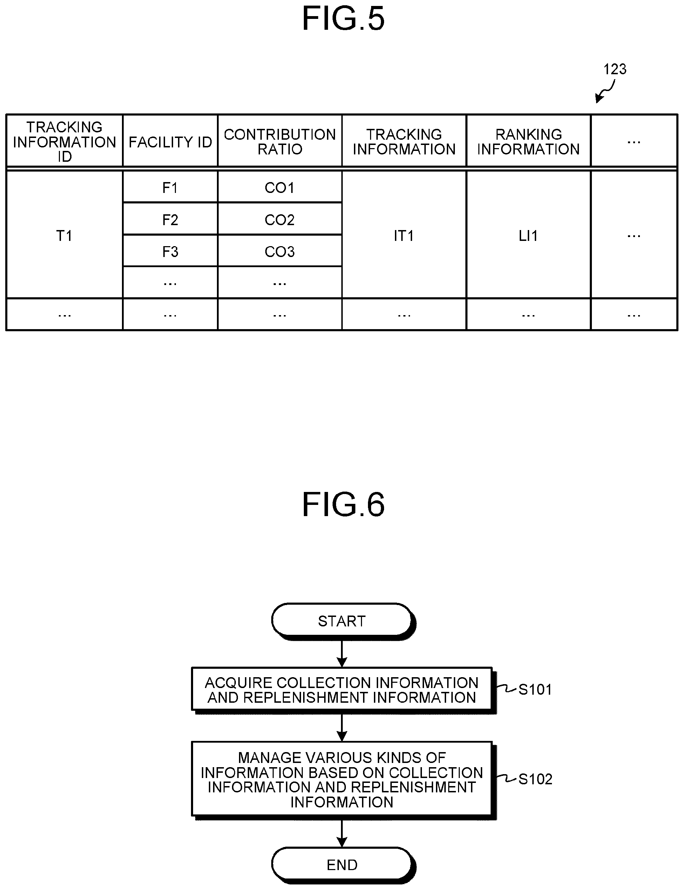

Here, FIG. 5 illustrates one example of the tracking information storage unit 123 according to the embodiment. In the example illustrated in FIG. 5, the tracking information storage unit 123 includes items of "tracking information ID", "facility ID", "contribution ratio", "tracking information", "ranking information", and the like.

The "tracking information ID" is an identifier for identifying tracking information. The "facility ID" is an identifier for identifying a facility that is associated with the "tracking information ID". The "contribution ratio" is information related to the contribution ratio that is associated with the "facility ID". Here, the contribution ratio mentioned here is a score that indicates a degree of contribution to a decrease in an environmental load.

The "tracking information" is tracking information that is able to track the course in which the used non-woven fabric products associated with the "tracking information ID" are recycled. The "ranking information" is information related to a ranking of the facilities that are associated with the "tracking information ID".

For example, the ranking information is information related to the ranking that has been ranked on the basis of the amount of collection of the used non-woven fabric products that have been collected from each of the facilities. Furthermore, the ranking information is information related to the ranking that has been ranked on the basis of the quality of the used non-woven fabric products that have been collected from each of the facilities. Furthermore, the ranking information is information related to the ranking that has been ranked on the basis of the contribution ratio of each of the facilities.

For example, in FIG. 5, "T1" that is identified by the tracking information ID indicates that the facility ID is "F1", the contribution ratio is "CO1", the tracking information is "IT1", and the ranking information is "LI1".

Moreover, in the example illustrated in FIG. 5, the contribution ratio and the like are represented by using abstract signs, such as "CO1", but the contribution ratio and the like may be indicated by a file format or the like of a file that includes information related to a numerical value, a character string, an address, and the like.

### (Regarding control unit 130)

The control unit 130 is a controller, and is implemented by causing, for example, a central processing unit (CPU), a micro processing unit (MPU), or the like to execute various kinds of programs (one example of an information processing program) stored in an internal storage device included in the information processing apparatus 100 by using a RAM as a work area. Furthermore, the control unit 130 is a controller and is implemented by, for example, an integrated circuit, such as an application specific integrated circuit (ASIC), a field programmable gate array (FPGA), or the like.

As illustrated in FIG. 2, the control unit 130 includes an acquisition unit 131, a management unit 132, an estimation unit 133, a generation unit 134, and a providing unit 135, and implements or performs a function or an operation of the information processing described below. Furthermore, an internal configuration of the control unit 130 is not limited to the configuration illustrated in FIG. 2, and another configuration may be used as long as it is possible to use the configuration in which the information processing that will be described later is performed. Furthermore, the connection relations among the processing units included in the control unit 130 are not limited to the connection relation illustrated in FIG. 2, but another connection relation may be used.

### (Regarding acquisition unit 131)

The acquisition unit 131 acquires various kinds of information. Specifically, the acquisition unit 131 acquires, for each facility that is used by the users, the collection information that is related to a collection of the used diapers that have been used by the users and the replenishment information that is related to the replenishment of the diapers that are used by the users.

For example, the acquisition unit 131 acquires, from the facility server 10, the information that is related to the stock quantity that is related to the stock of the diapers as the replenishment information, and acquires, from the facility server 10, the information that is related to the amount of collection of the used diapers as the collection information. Then, the acquisition unit 131 stores therein the replenishment information and the collection information in the management information storage unit 121.

As another example, in addition to the information related to the stock quantity as the replenishment information, the acquisition unit 131 may also acquire the information related to the type of the diaper, the information related to the size of the diaper, and the like. Then, the acquisition unit 131 may store the information related to the acquired type of the diaper, the information related to the size of the diaper, and the like in the management information storage unit 121.

In addition to the information related to the amount of collection of the used diapers as the collection information, the acquisition unit 131 may acquire the information related to the collection history that indicates the history of the used diapers that are collected before now, and the like. Then, the acquisition unit 131 may store the acquired collection history in the management information storage unit 121.

### (Regarding management unit 132)

The management unit 132 manages various kinds of information. Specifically, the management unit 132 manages various kinds of information for each facility on the basis of the replenishment information and the collection information that have been acquired by the acquisition unit 131. For example, the management unit 132 manages, as various kinds of information for each facility, the stock information on the diapers, the information related to an amount of the used diapers, and the like. To give a more specific example, the management unit 132 manages, as various kinds of information that are stored in the management information storage unit 121, the information related to the stock quantity of the diapers, the information related to the amount of collection of the used diapers for each facility.

### (Regarding estimation unit 133)

The estimation unit 133 estimates, on the basis of the collection information and the replenishment information that have been acquired by the acquisition unit 131, an amount of collection that is an amount of the used diapers that are to be collected from each of the facilities and an amount of replenishment that is an amount of diapers that are to be replenished to each of the facilities.

In the example illustrated in FIG. 3, on the basis of the information that is related to the stock quantity of the diapers in the facility indicated by "F1" that is identified by the facility ID stored in the management information storage unit 121, and on the basis of the information that is related to the amount of collection of the used diapers from the facility "F1" stored in the management information storage unit 121, the estimation unit 133 estimates the amount of collection of the used diapers that are to be collected from the facility "F1" and the amount of replenishment of the diapers that are to be replenished to the facility "F1".

To give a more specific example, the estimation unit 133 estimates the amount of collection of the used diapers indicated by the collection information as the amount of collection. Furthermore, the estimation unit 133 estimates, as the amount of replenishment, a difference between the stock quantity and a predetermined value that corresponds to the number of diapers that are manageable as a stock by the facility "F1".

Furthermore, the estimation unit 133 may estimate, for each facility, the contribution ratio on the basis of the collection history that is stored in the management information storage unit 121. Then, the estimation unit 133 stores the estimated contribution ratio for each facility in the tracking information storage unit 123.

For example, the estimation unit 133 estimates the contribution ratio on the basis of an arbitrary mathematical formula in which a contribution ratio is higher as the number of times the collected used diapers have been recycled is larger indicated by the collection history. In other words, the contribution ratio of the facility to be estimated is increased as the number of times indicating that the used diapers have been recycled is higher. In contrast, the contribution ratio of the facility to be estimated is decreased as the number of times indicating that the used diapers have been recycled is lower.

### (Regarding generation unit 134)

The generation unit 134 generates various kinds of information. Specifically, the generation unit 134 generates, on the basis of various kinds of information, ranking information related to a ranking of the business persons who is involved in the course of the recycling and who belongs to the facility from which the used diapers are collected.

For example, the generation unit 134 generates the ranking information in which the facilities are ranked in descending order of amount of collection on the basis of the amount of collection of the used diapers that have been collected from each of the facilities. Furthermore, the generation unit 134 may generate the ranking information in which the users are ranked in descending order of amount of collection on the basis of the amount of collection of the used diapers that have been collected from each of the users who use the associated facilities.

In another example, the generation unit 134 generates ranking information in which the facilities that are ranked in descending order of quality on the basis of the quality of the used diapers that have been collected from each of the facilities. Here, the quality of the used diapers is determined in accordance with the degree of easiness of a recycling process. For example, the quality is low in the case in which an impure substance, such as a piece of paper or newspaper, that wraps a hair and a used diaper and that is other than excrement is included in the used diaper. Furthermore, the quality is low in the case where an amount of feces included in the excrement included in the used diaper is equal to or larger than a predetermined amount. Furthermore, the quality is high in the case where the excrement included in the used diaper is only urine. Furthermore, the quality is high in the case where a garbage bag that contains therein a used diaper as an enclosure is a garbage bag made of recyclable material (for example, a garbage bag made of paper, a garbage bag made by using a pulp material, etc.) is used at the time of disposal of the used diaper. A scoring of the quality of the used non-woven fabric products is determined on the basis of the tendency described above. Furthermore, in the case where the used diapers are collected by being classified into types, sizes, or adult use or child use, a scoring may be performed such that the quality of the used non-woven fabric products is high.

To give a more specific example, it is assumed that information related to the quality of the collected used diapers is provided from the server that is managed by the recycling vendor. In this case, the generation unit 134 generates, on the basis of the provided information related to the quality of the used diapers, the ranking information in which the facilities are ranked in descending order of quality.

Furthermore, the generation unit 134 may generate the ranking information in which the facilities are ranked on the basis of the contribution ratio that has been estimated by the estimation unit 133.

Furthermore, the generation unit 134 generates, on the basis of the information related to the course in which the used diapers are recycled, the tracking information that is the information that indicates the course in which the used diapers are recycled.

For example, it is assumed that information related to a situation in which the used diapers that are recycled is always or periodically acquired from the server that is managed by a business person who is involved in the course of the recycle. In this case, the acquisition unit 131 acquires information related to an address or location information that is indicated by the facility server 10 that is placed in the facility in which the used diapers are collected, location information on a mobile object that delivers the used diapers, information related to the situation that is acquired from the server that is managed by the recycling vendor of the recycling plant FO1, and the like.

To give a more specific example, the acquisition unit 131 acquires the information related to the amount of collection of the used diapers, the information indicating that the collected used diapers are currently located in which of the areas, and information indicating which of the steps is currently being performed from among various kinds of steps (for example, during a process of decomposition, during a process of washing, in a middle of a process of being changed into new diapers, etc.) of the recycling process performed in the recycling plant FO1, and the like. Then, the generation unit 134 generates the map information that indicates that the collected used diapers are located which of the areas on the basis of location information and the information related to the situation that have been acquired by the acquisition unit 131. Furthermore, it is assumed that the map information that is used by the generation unit 134 is acquired from a predetermined external server that provides the map information.

Furthermore, the map information is map information in which a predetermined icon that indicates a location of the used diapers is displayed on a map in a superimposed manner. In this way, the generation unit 134 generates the map information as the tracking information. Then, the generation unit 134 stores the generated map information in the tracking information storage unit 123.

Here, information indicating what kind of business person is involved in the recycle of the used diapers may be displayed on the map information. In this case, the facility that is involved in the recycle of the used diapers is displayed on the map information.

Furthermore, the information related to the amount of collection before now, the information related to an amount of the new diapers that are generated by recycling the used diapers that have been collected, and the like may be displayed on the map information for each facility from which the used diapers have been collected. Furthermore, it is assumed that the information related to the amount of the new diapers that are generated by recycling the collected used diapers is provided from the recycling vendor.

### (Regarding providing unit 135)

The providing unit 135 provides various kinds of information. Specifically, the providing unit 135 provides, to the delivery company server 20, on the basis of the collection information and the replenishment information, the task information that is used to perform, for each facility, the tasks related to the collection of the used diapers and the replenishment of the diapers.

For example, in the case where the amount of collection of the used diaper to be collected from the facility "F1" that is stored in the management information storage unit 121 is equal to or larger than the predetermined amount and the amount of replenishment of the diapers to be replenished to the facility "F1" is equal to or larger than the predetermined amount, the providing unit 135 determines that the amount of collection and the amount of replenishment satisfy a predetermined condition. In this case, the providing unit 135 provides, as the task information to the delivery company server 20, information related to the task schedule indicating that the used diapers with an amount corresponding to the amount of collection are to be collected from the facility "F1" one week later and the diapers with an amount corresponding to the amount of replenishment are to be replenished to the facility "F1".

In contrast, in the case where the amount of collection of the used diaper to be collected from the facility "F1" that is stored in the management information storage unit 121 is less than the predetermined amount and the amount of replenishment of the diapers to be replenished to the facility "F1" is equal to or less than the predetermined amount, the providing unit 135 determines that the amount of collection and the mount of replenishment does not satisfy the predetermined condition. Furthermore, in the case where the amount of collection of the used diaper to be collected from the facility "F1" that is stored in the management information storage unit 121 is equal to or larger than the predetermined amount and the amount of replenishment of the diapers to be replenished to the facility "F1" is less than the predetermined amount, the providing unit 135 determines that the amount of collection and the mount of replenishment does not satisfy the predetermined condition. Furthermore, in the case where the amount of collection of the used diaper to be collected from the facility "F1" that is stored in the management information storage unit 121 is less than the predetermined amount and the amount of replenishment of the diapers to be replenished to the facility "F1" is less than the predetermined amount, the providing unit 135 determines that the amount of collection and the mount of replenishment does not satisfy the predetermined condition. In these cases, the providing unit 135 does not provide the task information to the delivery company server 20.

Moreover, in the example described above, the case has been described as an example in which the providing unit 135 determines whether or not the amount of collection and the amount of replenishment satisfy the predetermined condition, but the example is not limited to this. For example, the providing unit 135 may determine whether or not one of the amount of collection and the amount of replenishment satisfy the predetermined condition. For example, if the providing unit 135 determines that one of the amount of collection and the amount of replenishment satisfies the predetermined condition, the providing unit 135 may provide the task information to the delivery company server 20.

To give a more specific example, in the case where the amount of collection is equal to or larger than a predetermined threshold and the amount of replenishment is less than the predetermined threshold, the providing unit 135 may provide the task information. Furthermore, in the case where the amount of collection is less than the predetermined threshold and also the amount of replenishment is equal to or larger than the predetermined threshold, the providing unit 135 may provide the task information.

Furthermore, the providing unit 135 further provides the tracking information and the ranking information that are generated by the generation unit 134 to the facility server 10. Furthermore, the providing unit 135 may provide the tracking information, the ranking information, and the like on the facility that is used by the user to the terminal device that is used by a customer who nurses the user.

Furthermore, if the facility that is the providing destination of the ranking information is ranked in the top five, the providing unit 135 may further provide a message indicating that the facility contributes to environmental preservation. For example, the providing unit 135 may further provide a message that "Thanks to the efforts of a facility X, Y trees were saved from being cut down!", a message that "Thanks to the efforts of the facility X, CO₂ emission has been reduced by Z%!", or the like to the facility server 10.

### [4. Processing procedure (1)]

In the following, a procedure of the management process performed by the information processing apparatus 100 according to the embodiment will be described with reference to FIG. 6. FIG. 6 is a flowchart illustrating one example of the flow of the management process performed by the information processing apparatus 100 according to the embodiment.

As illustrated in FIG. 6, the acquisition unit 131 acquires the collection information and the replenishment information (Step S101). Subsequently, the management unit 132 manages various kinds of information on the basis of the collection information and the replenishment information (Step S102).

### [5. Processing procedure (2)]

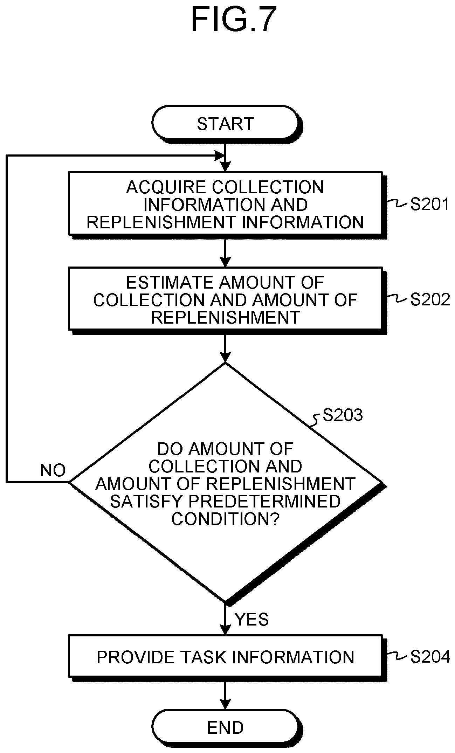

In the following, a procedure of the providing process performed by the information processing apparatus 100 according to the embodiment will be described with reference to FIG. 7. FIG. 7 is a flowchart illustrating one example of the flow of the providing process performed by the information processing apparatus 100 according to the embodiment.

As illustrated in FIG. 7, the acquisition unit 131 acquires the collection information and the replenishment information (Step S201). Subsequently, the estimation unit 133 estimates the amount of collection and the amount of replenishment (Step S202).

Then, the providing unit 135 determines whether or not each of the amount of collection and the amount of replenishment satisfies the predetermined condition (Step S203). Specifically, if the providing unit 135 determines that each of the amount of collection and the amount of replenishment does not satisfy the predetermined condition (No at Step S203), the providing unit 135 returns to the step before Step S201. For example, if the amount of collection is less than predetermined threshold and the amount of replenishment is equal to or larger than the predetermined threshold, the providing unit 135 returns to a process before Step S201.

In contrast, if the providing unit 135 determines that each of the amount of collection and the amount of replenishment satisfies the predetermined condition (Yes at Step S203), the providing unit 135 provides the task information (Step S204). For example, if the amount of collection is equal to or larger than the predetermined threshold and the amount of replenishment is equal to or larger than the predetermined threshold, the providing unit 135 provides the task information.

### [6. Modification]

The information processing apparatus 100 described above may also be performed with various kinds of embodiments other than the embodiments described above. Accordingly, in the following, another embodiment of the information processing apparatus 100 will be described.

### [6-1. Non-woven fabric product]

In the embodiment described above, the case has been described as an example in which the non-woven fabric product is a diaper, but the example is not limited to this. For example, the non-woven fabric product may be a sanitary item, an incontinence pad for a mild degree, a urine collection pad, a baby wipe, a bed sheet, or the like. Furthermore, the non-woven fabric product may be a non-woven fabric product that has been provided by a subscription service that is contracted by a customer, such as a parent who nurses the user, a brother of the user, or a relative of the user.

As another example, the non-woven fabric product may be a diaper, a pet sheet, or the like that is used by a pet. In this case, the non-woven fabric product is used with respect to a pet in a pet related facility or the like including an animal hospital, a pet shop that treats a living body, a trimmer facility, a facility that temporarily keeps a pet, or the like.

### [6-2. Information processing]

In the embodiment described above, the case has been described as an example in which the providing unit 135 provides the task information to the delivery company server 20, but the example is not limited to this. For example, the providing unit 135 may provide the task information to each of the collection vendor that collects the used non-woven fabric products and the replenishment vendor that replenishes the non-woven fabric products.

For example, the providing unit 135 may provide, as the task information, the replenishment task information for performing a task related to the replenishment of the non-woven fabric products to the replenishment vendor. Then, the providing unit 135 may provide, as the task information, the collection task information for collecting the used non-woven fabric products as a recycle target to a collection business person.

### [6-3. Task information]

In the embodiment described above, the case has been described as an example in which the task information is the task information for performing, for each facility, the task related to the collection of the used diapers and the replenishment of the diapers, but the example is not limited to this. For example, the task information may also include the task schedule that is arranged such that priority is given to the facility to which a delivery of diapers can be conducted first from among the facilities to be called.

Furthermore, the task information may include a task schedule for the delivery of the diapers and the collection of the used diaper is arranged to be performed first starting from the facility that has higher priority related to the delivery of diapers and the collection of used diapers. To give a more specific example, the task information may include a task schedule such that a delivery of diapers and a collection of used diapers are performed first starting from a kindergarten or a nursery school, and then, a delivery of diapers and a collection of used diapers are performed with respect to a care facility. In other words, the task schedule is a task schedule that is arranged such that the used diapers egested by children are collected first and the used diapers egested by adults are collected after that.

Furthermore, the task information may include a task schedule for delivering diapers to each of the facilities first and then collecting diapers from each of the facilities.

Furthermore, the task information may be task information that includes the task schedule that is arranged for the facility in which only a delivery of the diapers is performed and for the facility in which a delivery of the diaper and a collection of the used diapers are performed. To give a more specific example, it is assumed that the care facility has an incineration facility in which the used diapers are able to be incinerated. In this case, the task information may include a task schedule that is arranged such that only a delivery of the diapers is performed with respect to the care facility and a delivery of diapers and a collection of used diapers are performed with respect to the other facilities.

Furthermore, the task information may include a task schedule that is arranged such that, after the tasks of a delivery of the diapers and a collection of used diapers have been performed on both the care facility NU1 and the nursery school KI1 illustrated in FIG. 1, the diapers that are to be replenished are acquired by returning to the distribution center LO1, and, furthermore, the tasks of the delivery of the diapers and the collection of the used diapers are performed on the other facilities before returning to the recycling plant FO1. In this way, the task information may be task information that includes a plurality of times of replenishment performed in the distribution center LO1.

Furthermore, the task information may be a task schedule that is arranged such that the delivery of the diapers and the collection of the used diapers are performed on each of the care facility NU1 and the nursery school KI1 illustrated in FIG. 1 before going to the recycling plant FO1, and then the delivery of the diapers and the collection of the used diapers are performed on the other facilities.

Furthermore, in the case where a period of time in which diapers are received has been assigned in accordance with the facility, the task information may include a task schedule in which a delivery of the diapers can be performed during the period of time.

Furthermore, the task information may include not only the task schedule that has been arranged with respect to a single mobile object but also the task schedule that has been arranged with respect to a plurality of mobile objects. For example, it is assumed that a facility associated with a delivery of the diapers and a facility associated with a collection of the used diapers are allocated for each mobile object. In this case, the task information may include the task schedule that has been arranged with respect to the plurality of mobile objects. Furthermore, the task information may be the task information that includes a delivery route in which the plurality of mobile objects are efficiently able to perform both the delivery of the diapers and the collection of the used diapers. In this case, the delivery route is assigned to each of the mobile objects.

Furthermore, the used diapers that have been collected from each of the facilities may be temporarily gathered up at a predetermined location. Then, the delivery company SH1 may deliver the used diapers from the predetermined location to the recycling plant FO1 by using a large size truck. At this time, the task information may include a task schedule that is arranged such that the used diapers that have been collected from each of the facilities are gathered up at the predetermined location.

### [6-4. Collection device]

In the embodiment described above, the case has been described as an example in which the used diapers are collected from the facilities, but the example is not limited to this. For example, the used diapers may be collected to a predetermined collection device that is installed in a facility.

For example, the collection device may be a housing unit that houses the used diapers in the interior of the collection device, or may be a recycling box that includes a detection sensor or the like that detects the weight or the stock quantity of the plurality of diapers that are housed in the interior of the collection device.

To give a more specific example, it is assumed that the collection device includes a lid and is an airtight box. Furthermore, it is assumed that the collection device includes a button that is used to open the lid. In this case, the collection device opens the lid when the button included in the collection device is pressed by a business person in the facility. Subsequently, the business person in the facility discards the used diapers to the collection device. Then, the collection device closes the lid when the button included in the collection device is pressed by the business person in the facility.

Furthermore, the collection device calculates the number of used diapers on the basis of the detection information detected by a weighted sensor, a pressure sensor, or the like by using the weighted sensor, the pressure sensor, or the like as the detection sensor.

Furthermore, the collection device includes a communication unit for performing interactive communication with each of the devices. For example, the communication unit is connected to the network N by various kinds of wireless communication, such as Long Term Evolution (LTE), the fourth generation (4G) including LTE-Advanced or the like, and 5G, or a wireless LAN (Local Area Network), such as Bluetooth (registered trademark) and Wireless Fidelity (Wifi) (registered trademark), or various kinds of wired communication, and performs communication with various kinds of devices via the network N. As a result of this, the acquisition unit 131 may directly acquire the information related to the amount of collection of the used diapers from the collection device.

Furthermore, the collection device may further performs, by using various kinds of conventional technologies, recycle pre-treatment (a primary treatment for the recycling process) for recycling the used diapers.

For example, the collection device performs the recycle pre-treatment by using a processing agent, such as multivalent metal salt, in particular alkaline-earth metal salt, that is, for example, a chemical compound including calcium salt, such as calcium chloride, an aqueous solution including these types of salt, alcohol for cleaning, or a medical agent that reduces an odor of excrement, for separating excrement (in particular, urine or feces) from the high water-absorption resin that constitutes a diaper.

Furthermore, the collection device reduces the volume of the used diaper by performing the recycle pre-treatment by using the processing agent on the used diaper. As a result of this, the collection device is able to deliver a larger amount of used diapers at one time when the delivery company SH1 delivers the used diapers to the recycling plant FO1. In this way, the collection device is able to reduce the time and effort for transporting the recycle target to the delivery company SH1.

### [6-5. Consideration of mobile object]

In the embodiment described above, the case has been described as an example in which the estimation unit 133 estimates, on the basis of the collection information and the replenishment information that are acquired by the acquisition unit 131, the amount of collection that is the amount of the used diapers that are collected from each of the facilities and the amount of replenishment that corresponds to the amount of diapers that are to be replenished to each of the facilities, but the example is not limited to this. Specifically, the estimation unit 133 may estimate the amount of collection and the amount of replenishment on the basis of the collection information, the replenishment information, and the information related to the mobile object that delivers the used non-woven fabric products and the non-woven fabric products. Here, the mobile object is, for example, an automobile, or the like, such as a truck, that delivers a parcel.

For example, it is assumed that the information related to a loadable loading capacity of a truck is stored in advance as the information related to the mobile object in the storage unit 120. In this case, the estimation unit 133 may estimate the amount of collection and the amount of replenishment on the basis of the information related to a stock quantity of diapers, an amount of collection of the used diapers, and the loading capacity of the truck.

To give a more specific example, the estimation unit 133 estimates the amount of collection of the used diaper indicated by the collection information as the amount of collection. Furthermore, the estimation unit 133 estimates, as the amount of replenishment, a difference between the stock quantity and a predetermined value that corresponds to the number of diapers that are manageable as a stock by the facility. Then, the estimation unit 133 changes the estimated amount of collection and the amount of replenishment in consideration of the loading capacity of the truck.

In this way, the estimation unit 133 estimates the amount of collection and the amount of replenishment in consideration of the loading capacity of the truck. As a result of this, the estimation unit 133 estimates the amount of collection and the amount of replenishment in consideration of the loading capacity of the truck with respect to articles that are not folded by regulations, such as used diapers, so that it is possible to enhance the efficiency of delivering used diapers and new diapers.

Furthermore, it is assumed that the information related to a loadable weight of the truck is stored as information related to the mobile object in the storage unit 120 in advance. In this case, the estimation unit 133 may estimate the amount of collection and the amount of replenishment on the basis of the collection information, the replenishment information, and the loadable weight of the truck.

To give a more specific example, the estimation unit 133 estimates, as the amount of collection, an amount of collection of the used diapers indicated by the collection information. Furthermore, the estimation unit 133 estimates, as the amount of replenishment, a difference between the stock quantity and the predetermined value that corresponds to the number of diapers that are manageable as a stock by the facility. Then, the estimation unit 133 changes the estimated amount of collection and the amount of replenishment in consideration of the loadable weight of the truck.

In this way, the estimation unit 133 estimates the amount of collection and the amount of replenishment in consideration of the loadable weight of the truck. As a result of this, the estimation unit 133 also estimates the amount of collection and the amount of replenishment in consideration of the loadable weight of the truck with respect to articles, such as used diapers, that became heavier as a result of absorbing excrement, so that it is possible to enhance the efficiency of delivering the used diapers and the new diapers.

In this way, the estimation unit 133 estimates the amount of collection and the amount of replenishment on the basis of the collection information, the replenishment information, and the information related to the mobile object that delivers the used non-woven fabric products and the non-woven fabric products, so that it is possible to enhance the efficiency of delivering the used non-woven fabric products and the non-woven fabric products. Furthermore, the estimation unit 133 may estimate the amount of collection and the amount of replenishment on the basis of the information related to the stock quantity of the diapers, the amount of collection of the used diapers, the loading capacity of the truck, and the loadable weight of the truck.

### [6-6. Tracking information]

In the embodiment described above, the case has been described as an example in which the generation unit 134 generates, on the basis of the information related to the course in which the used diapers are recycled, the tracking information that is the information that indicates the course in which the used diapers are recycled, but the example is not limited to this. For example, the information processing apparatus 100 may share, by using a blockchain technology, the information that indicates the course of with another business person.

To give a more specific example, it is assumed that the server that is managed by a business person who is involved in the course of a recycling process is able to connect a predetermined platform that uses a blockchain. In this case, as a result of each of the business persons sharing, by way of the predetermined platform, the location information of each of the facilities, the location information on the mobile objects, the information related to the situation of the used diapers that are being recycled, and the like, the information processing apparatus 100 may acquire the information that indicates the course of the recycling process.

### [6-7. Use information]

Furthermore, the acquisition unit 131 may further acquire the user information related to each of the users from the facility server 10. For example, the acquisition unit 131 acquires, as the user information, information related to the diapers that are used by each of the users, information related to the type of the diapers, information related to the size of the diapers, information related to the number of diapers to be used per day, information related to the amount of collection of the used diapers that have been used by each of the users, and the like. Then, the acquisition unit 131 stores the acquired user information in the user information storage unit 122. Furthermore, the management unit 132 may manage the user information. Furthermore, the management unit 132 may manage the number of users for each facility.

Furthermore, the acquisition unit 131 further acquires, as the user information, information on the age of the user, the gender, the weight, the height, or the like. Then, the acquisition unit 131 stores the further acquired user information in the user information storage unit 122.

Furthermore, the estimation unit 133 may estimate a contribution ratio for each user on the basis of the information related to the amount of collection of the used diapers stored in the user information storage unit 122. Subsequently, the generation unit 134 may generate the ranking information in which the users are ranked on the basis of the contribution ratio that has been estimated by the estimation unit 133. Then, the providing unit 135 may further provide the ranking information on the users to the terminal devices. Furthermore, in the case where a user nursed by a customer who uses a terminal device installed in the providing destination to which the ranking information is provided is ranked in the top five, the providing unit 135 may provide a message indicating that the user contributes to environmental preservation. For example, the providing unit 135 may provide a message that "As a consequence of your actions, X trees were saved from being cut down!", a message that "As a consequence of your actions, CO₂ emission has been reduced by Y%!", or the like to the terminal device.

### [6-8. Process after recycle]

Furthermore, after the delivery company SH1 performs the recycling process on the used diapers in the recycling plant FO1, the delivery company SH1 may provide a pulp material obtained from the recycling process to the business person who manages the information processing apparatus 100. In this case, the delivery company SH1 may receive a predetermined compensation in compensation for providing the pulp material from the business person who manages the information processing apparatus 100.

Furthermore, the business person who manages the information processing apparatus 100 may generate non-woven fabric products that have been recycled by using the pulp material provided by the delivery company SH1. In this case, the business person who manages the information processing apparatus 100 may use the pulp material recycled from adult diapers that are used by, for example, an elderly person or the like, and may generate child diapers. At this time, the providing unit 135 may provide, to the facility from which the adult diapers have been collected, a message indicating that the child diapers are generated from the collected diapers and are of benefit to the children.

Furthermore, the business person who manages the information processing apparatus 100 may use the pulp material recycled from, for example, the child diapers, and may generate child diapers. Furthermore, the business person who manages the information processing apparatus 100 may use the pulp material recycled from, for example, the adult diapers, and may generate adult diapers. Furthermore, the business person who manages the information processing apparatus 100 may use the pulp material recycled from, for example, the child diapers, and may generate adult diapers.

### [6-9. Incentive]

Furthermore, the providing unit 135 may provide information related to an incentive on the basis of the ranking information that has been generated by the generation unit 134. For example, the providing unit 135 may provide the information related to the incentive to the facility that is ranked above a predetermined rank in the ranking that is indicated by the ranking information on the facilities.

Here, the information related to the incentive is information related to one or more non-woven fabric products, or the like. For example, the information related to the incentive is information related to one or more diapers that are able to be provided without charge, information related to one or more baby wipes that are able to be provided without charge, or the like. As a result of this, the providing unit 135 is able to provide motivation to perform the recycling with respect to the business person in the facility.

Furthermore, the providing unit 135 may provide information related to an incentive with respect to the user who is ranked above a predetermined rank in the ranking that is indicated by the ranking information on the users. As a result of this, the providing unit 135 is able to provide motivation to perform the recycling with respect to the user and the customer who nurses the user. Furthermore, the providing unit 135 is able to reduce a mental obstacle with respect to recycling of the used diapers as a result of providing a gaming property to the user and the customer.

### [6-10. Others]

Of the processes described above, the whole or a part of the processes that are mentioned as being automatically performed may also be manually performed. Furthermore, the whole or a part of the processes that are mentioned as being manually performed may also be automatically performed using known methods. Furthermore, the flow of the processes, the specific names, and the information containing various kinds of data or parameters indicated in the above specification and drawings may be arbitrarily changed unless otherwise stated. For example, the various kinds of information illustrated in each of the drawings are not limited to the information illustrated in the drawings.

Furthermore, the components of each of the units illustrated in the drawings are only for conceptually illustrating the functions thereof and are not always physically configured as illustrated in the drawings. In other words, the specific shape of a separate or integrated device is not limited to the drawings. Specifically, all or part of each of the components may be configured by functionally or physically separating or integrating any of the units depending on various loads or use conditions.

Furthermore, each of the processes described above may be appropriately used in combination as long as the content of processes does not conflict with each other.

Furthermore, the "components (sections, modules, or units)" described above may be read as "means", "circuits", or the like. For example, the providing unit can be read as providing means or a providing circuit.

### [7. Hardware configuration]

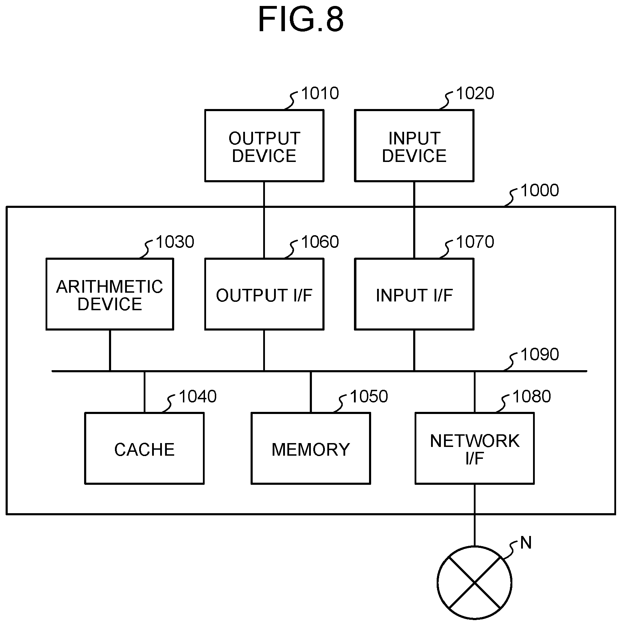

Furthermore, the facility server 10, the delivery company server 20, and the information processing apparatus 100 according to the embodiment described above are implemented by a computer 1000 having a configuration illustrated in, for example, FIG. 8. FIG. 8 is a diagram illustrating one example of a hardware configuration. The computer 1000 is connected to an output device 1010 and an input device 1020, and, an arithmetic device 1030, a cache 1040, a memory 1050, an output interface (I/F) 1060, an input I/F 1070, and a network I/F 1080 are connected by a bus 1090.

The arithmetic device 1030 operates on the basis of a program that is stored in the cache 1040 or the memory 1050 or a program that is read from the input device 1020, and performs various processes. The cache 1040 is a cache, such as a RAM, that temporarily stores therein data that is used for various kinds of arithmetic calculation by the arithmetic device 1030. Furthermore, the memory 1050 is a storage device in which data that is used for various kinds of arithmetic calculation by the arithmetic device 1030 or various databases are stored, and is a memory that is implemented by a read only memory (ROM), a hard disk drive (HDD), a flash memory, or the like.

The output I/F 1060 is an interface for transmitting information corresponding to an output target to the output device 1010, such as a monitor or a printer, that outputs various kinds of information, and may be implemented by a connector standardized by, for example, a universal serial bus (USB), a digital visual interface (DVI), a high definition multimedia interface (HDMI) (registered trademark). In contrast, the input I/F 1070 I s an interface for receiving information from the various input devices 1020, such as a mouse, a keyboard, and a scanner, and is implemented by, for example, a USB or the like.

For example, the input device 1020 may be implemented by a device that reads information from an optical recording medium, such as a compact disk (CD), a digital versatile disk (DVD), or a phase change rewritable disk (PD), a magneto-optical recording medium, such as a magneto-optical disk (MO), a tape medium, a magnetic recording medium, or a semiconductor memory. Furthermore, the input device 1020 may be implemented by an external storage medium, such as a USB memory.

The network I/F 1080 has a function to receive data from other devices via the network N, transmit data to the arithmetic device 1030, and transmit data generated by the arithmetic device 1030 to other devices via the network N.

Here, the arithmetic device 1030 controls the output device 1010 and the input device 1020 via the output I/F 1060 and the input I/F 1070. For example, the arithmetic device 1030 loads a program from the input device 1020 or the memory 1050 onto the cache 1040, and executes the loaded program. For example, if the computer 1000 functions as the information processing apparatus 100, the arithmetic device 1030 included in the computer 1000 executes the program loaded on the cache 1040 to implement the function of the control unit 130.

In the above, embodiments of the present application have been described in detail based on the drawings; however the embodiments of the present application are described only by way of an example. In addition to the embodiments described in disclosure of invention, the present application may be implemented in a mode in which various modifications and changes are made in accordance with the knowledge of those skilled in the art.

### Reference Signs List

- N: network
- 1: information processing system
- 10: facility server
- 20: delivery company server
- 100: information processing apparatus
- 110: communication unit
- 120: storage unit
- 121: management information storage unit
- 122: user information storage unit
- 123: tracking information storage unit
- 130: control unit
- 131: acquisition unit
- 132: management unit
- 133: estimation unit
- 134: generation unit
- 135: providing unit

## Claims

1. An information processing apparatus comprising:
an acquisition unit that acquires, for each facility that is used by users, collection information related to a collection of used non-woven fabric products that have been used by the users and replenishment information related to replenishment of non-woven fabric products that are to be used by the users; and
a providing unit that provides, based on the collection information and the replenishment information, task information for performing, for each of the facilities, a task that is related to the collection of the used non-woven fabric products and the replenishment of the non-woven fabric products.

2. The information processing apparatus according to claim 1, further comprising an estimation unit that estimates, based on the collection information and the replenishment information that are acquired by the acquisition unit, an amount of collection that is an amount of the used non-woven fabric products to be collected from each of the facilities, and an amount of replenishment that is an amount of the non-woven fabric products to be replenished to each of the facilities, wherein
the providing unit provides the task information based on the amount of collection and the amount of replenishment.

3. The information processing apparatus according to claim 2, wherein the estimation unit estimates the amount of collection and the amount of replenishment based on the collection information, the replenishment information, and information related to a mobile object that delivers the used non-woven fabric products and the non-woven fabric products.

4. The information processing apparatus according to claim 3, wherein the estimation unit estimates the amount of collection and the amount of replenishment based on the collection information, the replenishment information, and a loadable loading capacity of the mobile object as the information related to the mobile object.

5. The information processing apparatus according to claim 3 or 4, wherein the estimation unit estimates the amount of collection and the amount of replenishment based on the collection information, the replenishment information, and a loadable weight of the mobile object as the information related to the mobile object.

6. The information processing apparatus according to any one of claims 1 to 5, wherein the providing unit provides, as the task information, replenishment task information for performing, for each of the facilities, the task related to the replenishment of the non-woven fabric products to a business person who replenishes the non-woven fabric products.

7. The information processing apparatus according to any one of claims 1 to 6, wherein the providing unit provides, as the task information, collection task information for collecting, for each of the facilities, the used non-woven fabric products as a recycle target to the business person who collects the used non-woven fabric products.

8. The information processing apparatus according to any one of claims 1 to 7, further comprising a generation unit that generates ranking information related to a ranking of the facilities based on the collection information, wherein
the providing unit further provides the ranking information to the facilities.

9. The information processing apparatus according to claim 8, wherein
the acquisition unit further acquires information related to a course in which the used non-woven fabric products are recycled,
the generation unit further generates, based on the information related to the course, tracking information that is information indicating the course in which the used non-woven fabric products are recycled, and
the providing unit further provides the tracking information to the facilities.

10. The information processing apparatus according to any one of claims 1 to 9, further comprising a management unit that manages, for each of the facilities, information related to the non-woven fabric products based on the collection information and the replenishment information.

11. The information processing apparatus according to claim 10, wherein the management unit manages, for each of the facilities, an amount of the used non-woven fabric products that have been used by the users as the information related to the non-woven fabric products.

12. The information processing apparatus according to claim 10 or 11, wherein the management unit manages, for each of the facilities, a stock quantity that is the number of non-woven fabric products that are to be used by the users as the information related to the non-woven fabric products.

13. The information processing apparatus according to any one of claims 10 to 12, wherein the management unit manages, for each of the facilities, the number of users who use the non-woven fabric products.

14. An information processing method performed by a computer, the information processing method comprising:
an acquiring step of acquiring, for each facility that is used by users, collection information related to a collection of used non-woven fabric products that have been used by the users and replenishment information related to replenishment of non-woven fabric products that are to be used by the users; and
a providing step of providing, based on the collection information and the replenishment information, task information for performing, for each of the facilities, a task that is related to the collection of the used non-woven fabric products and the replenishment of the non-woven fabric products.

15. An information processing program that causes a computer to execute a process comprising:
an acquiring step of acquiring, for each facility that is used by users, collection information related to a collection of used non-woven fabric products that have been used by the users and replenishment information related to replenishment of non-woven fabric products that are to be used by the users; and
a providing step of providing, based on the collection information and the replenishment information, task information for performing, for each of the facilities, a task that is related to the collection of the used non-woven fabric products and the replenishment of the non-woven fabric products.
